# EUROPÄISCHE PATENTSCHRIFT

(11) **EP 0 700 407 B1**
(45) Veröffentlichungstag und Bekanntmachung des Hinweises auf die Patenterteilung: **18.03.1998**
(21) Anmeldenummer: 94917597.0
(22) Anmeldetag: 09.05.1994
(51) Int. Cl.: C08G 18/32, C08G 18/36

(54) **VERWENDUNG VON ANLAGERUNGSPRODUKTEN ZUR HERSTELLUNG VON POLYADDITIONS- BZW. POLYKONDENSATIONSPRODUKTEN**
USE OF ADDUCTS FOR PREPARING POLYADDITION OR POLYCONDENSATION PRODUCTS
UTILISATION DES PRODUITS D'ADDITION DANS LA PREPARATION DE PRODUITS DE POLYADDITION OU DE POLYCONDENSATION

(30) Priorität: 17.05.1993 DE 4316483
(43) Veröffentlichungstag der Anmeldung: 13.03.1996
(73) Patentinhaber: Henkel Kommanditgesellschaft auf Aktien, 40191 Düsseldorf (DE)
(72) Erfinder: KLEIN, Johann, D-40233 Düsseldorf (DE); DAUTE, Peter, D-45127 Essen (DE); GRÜTZMACHER, Roland, D-42489 Wülfrath (DE)
(86) Internationale Anmeldenummer: EP9401482
(87) Internationale Veröffentlichungsnummer: WO9426801

(56) Entgegenhaltungen:
- EP-A- 0 113 798
- DE-A- 3 504 228
- FR-A- 2 088 250
- GB-A- 793 780
- US-A- 2 990 376
- Römpp, Chemie Lexikon, 8.Auflage, Seiten 3591-2

## Beschreibung

Die Erfindung betrifft die Verwendung von Anlagerungsprodukten von durchschnittlich 0,5 bis 2 Mol Ethylen- und/oder Propylenoxid an Glycerin zur Herstellung von Polyadditions-bzw. Polykondensationsprodukten, wobei man die genannten Anlagerungsprodukte
a) unmittelbar oder
b) über die Zwischenstufe der Umesterungsprodukte mit Estern von C₁ bis C₄-Alkoholen und C₁₂ bis C₂₂-Fettsäuren, wobei die Ester der Ricinolsäure nicht umfaßt sind
mit mehrwertigen Isocyanaten oder mehrwertigen Carbonsäuren bzw. Carbonsäureestern polymerisiert.

### Stand der Technik

In einer Zeit, die geprägt ist durch einen wachsenden Bedarf an Konsumgütern und hochwertigen Produkten, kommt der Entwicklung neuer, leistungsfähigere Kunststoffe eine große Bedeutung zu. In gleicher Weise ist jedoch auch die Verbesserung bestehender Typen von Wichtigkeit, was insbesondere Aspekte wie die Energieeinsparung bei der Herstellung, den Ersatz problematischer Arbeitsstoffe und eine nachwachsende Rohstoffbasis betrifft.

Ein wichtiger Baustein zur Herstellung von Kunststoffen ist das Trimethylolpropan (TMP), das beispielsweise mit Polycarbonsäuren zu Polyestern oder Alkydharzen umgesetzt werden kann. Diese Verbindungen können gegebenenfalls mit Isocyanaten (im Falle von Polyesterpolyolen), mit Luft unter der Einwirkung von Licht (im Falle von ungesättigten Alkydharzen), durch Radikalstarter oder Wärmeeinwirkung weiter vernetzt werden. Obschon TMP in der Polymertechnik seit langem bekannt ist und in großen Mengen eingesetzt wird, ist die Verwendung doch mit einer Reihe von Nachteilen verbunden:
*** Trimethylolpropan ist unter Normalbedingungen ein Feststoff. Der Transport erfolgt üblicherweise in beheizten Kesselwagen und über beheizte Rohrleitungen. Der Einsatz dieses Stoffes ist folglich nur mit erheblichem technischen Aufwand und Energiezufuhr möglich.
*** Trimethylolpropan wird durch Tollens-Kondensation von Formaldehyd und Butyraldehyd, zwei ausschließlich petrochemischen und damit nicht-erneuerbaren Rohstoffen gewonnen.
*** Trimethylolpropan ist stark hygroskopisch; für viele Anwendungen ist daher eine Trocknung erforderlich.

In der Vergangenheit hat es nicht an Versuchen gemangelt, TMP gegen andere, verwandte Polyolkomponenten auszutauschen. So hat man versucht, TMP gegen Glycerin zu ersetzen, das flüssig und nativ ist und ein ideales Substitut darstellen sollte. In der Folge hat sich jedoch erwiesen, daß die daraus hergestellten Polymeren eine vergleichsweise geringere Hitze-, Licht-, Feuchtigkeits- und Alkalibeständigkeit aufweisen. Außerdem ist Glycerin stark hygroskopisch. Ferner besteht bei Verwendung von Glycerin als Polyolkomponente die Gefahr, daß sich in Gegenwart saurer Katalysatoren Acrolein und in Gegenwart basischer Katalysatoren Polyglycerine als unerwünschte Nebenprodukte bilden [vgl. **Kirk-Othmer, Enzyklopaedia of chemical technology, 2, 60 (1992)]**.

Flüssige Polyolkomponenten wie Glycerin- und TMP-Propoxylate, beispielsweise Glycerin-3PO (Voranol^{(R)} CP, Dow) oder TMP-5PO (Desmophen^{(R)} 550, Bayer) sind am Markt erhältlich, aber für den Ersatz von TMP wenig geeignet, da sie eine wesentlich niedrigere Hydroxylzahl als TMP aufweisen. Die daraus herstellbaren Polymeren weichen daher in ihren Eigenschaften von TMP basierten Produkten ab. Ein weiterer Nachteil besteht darin, daß die genannten Glycerin- bzw. TMP-Propoxylate wesentlich langsamer als TMP selber abreagieren. Die Verwendung von höhermolekularen Alkylenoxidaddukten an mehrwertige Alkohole zur Herstellung von Polymeren ist beispielsweise in der **DE-A1 32 46 616** (Henkel) und in der FR-A-2 088 250 beschrieben.

Die komplexe Aufgabe der Erfindung hat somit darin bestanden, neue Polyolkomponenten für den Ersatz von TMP in Polyadditions- bzw. Polykondensationsprodukten bereitzustellen, die flüssig und weniger hygroskopisch als TMP sind, eine vorteilhafte Ökobilanz besitzen, rasch abreagieren und mit einer Vielzahl von Reaktionspartnern ausreichend kompatibel sind. Zudem sollten die resultierenden Polymeren in ihren Eigenschaften mit denen auf Basis TMP zumindest vergleichbar sein.

### Beschreibung der Erfindung

Gegenstand der Erfindung ist die verwendung von Anlagerungsprodukten von durchschnittlich 0,5 bis 2 Mol Ethylen- und/oder Propylenoxid an Glycerin zur Herstellung von Polyadditions-bzw. Polykondensationsprodukten, wobei man die genannten Anlagerungsprodukte
a) unmittelbar oder
b) über die Zwischenstufe der Umesterungsprodukte mit Estern von C₁ bis C₄-Alkoholen und C₁₂ bis C₂₂-Fettsäuren, wobei die Ester der Ricinolsäure nicht umfaßt sind
mit mehrwertigen Isocyanaten oder mehrwertigen Carbonsäuren bzw. Carbonsäureestern polymerisiert.

Im Sinne der Erfindung haben sich die genannten Glycerinalkoxylate bei der Herstellung von Polymeren als idealer Ersatz für TMP erwiesen, da sie flüssig und weniger hygroskopisch als TMP sind, weitgehend auf natürlichen Rohstoffen basieren und die resultierenden Kunststoffe in ihren Eigenschaften mit denen auf Basis TMP praktisch identisch sind.

Die erfindungsgemäßen Alkylenoxid-Anlagerungsprodukte können unmittelbar mit mehrwertigen Isocyanaten und/oder mehrwertigen Carbonsäuren bzw. -estern zu Polyurethanen oder Polyestern abreagieren. Dabei ist die Verträglichkeit wesentlich besser als beim Einsatz von Glycerin.

In einer bevorzugten Ausführungsform der Erfindung verläuft die Reaktion jedoch über eine Zwischenstufe, bei der die Alkylenoxidaddukte mit Fettsäureestern, vorzugsweise synthetischen oder natürlichen Fetten und Ölen umgeestert werden.

Die resultierenden Umesterungspolyole können dann im zweiten Schritt wiederum mit mehrwertigen Isocyanaten und/oder mehrwertigen Carbonsäuren bzw. -estern zu Polyurethanen oder Polyestern abreagieren.

Überraschenderweise wurde gefunden, daß die erfindungsgemäßen Anlagerungsprodukte von 0,5 bis 2 Mol Ethylen- und/oder Propylenoxid an Glycerin - sowohl als direkte Polyolkomponenten, als auch in Form der Umesterungspolyole - einen vollwertigen Ersatz für Trimethylolpropan darstellen. Besonders vorteilhaft haben sich Addukte von 0,8-1,2 Mol EO und/oder PO an 1 Mol Glycerin erwiesen.

Die Erfindung schließt die Erkenntnis ein, daß beispielsweise
*** die als Zwischenstufen gebildeten Umesterungspolyole auf Basis der Glycerinalkoxylate und Trimethylolpropan ein vergleichbares Kälteverhalten und eine vergleichbare Viskosität aufweisen, und
*** die Verträglichkeit der Umesterungspolyole auf Basis der erfindungsgemäßen Glycerinalkoyxlate bei der Umsetzung mit Isocyanaten besser ist als bei analogen Produkten auf Basis TMP. Im Sinne des erfindungsgemäßen Verfahrens können sogar transparente, harte PU-Massen hergestellt werden. Entsprechende Verbindungen auf Basis Glycerin sind heterogen und mit Isocyanaten unverträglich. Polyesterpolyole auf Basis höheralkoxylierter Glycerine ergeben zu spröde Massen.

Auch die Umsetzung von Umesterungspolyolen auf Basis von Glycerinalkoxylaten mit Polycarbonsäuren wie Adipinsäure bzw. Phthalsäure führt ebenfalls problemlos zu den entsprechenden Alkydharzen.

### Glycerinalkoxylate

Anlagerungsprodukte von Alkylenoxiden an Glycerin stellen bekannte Stoffe dar, die nach den einschlägigen Verfahren der präparativen organischen Chemie erhalten werden können. Großtechnisch erfolgt ihre Herstellung durch Ethoxylierung bzw. Propoxylierung von Glycerin in Gegenwart basischer Katalysatoren, wie beispielsweise Lithiumhydroxid, Kaliumhydroxid, Natriummethylat, Strontiumphenolat oder calcinierter Hydrotalcit, bei Temperaturen im Bereich von 120 bis 180 °C und einem Druck von 1 bis 5 bar. Werden gemischte Alkoxylate eingesetzt, so kann die Alkoxylierung blockweise oder randomisiert erfolgen. Im Anschluß an die Alkoxylierung können die Produkte durch Zugabe von Säuren (Phosphorsäure, Essigsäure, vorzugsweise Milchsäure) neutralisiert werden; nicht neutralisierte Katalysatoren - insbesondere Lithiumhydroxid - können jedoch auch für nachfolgende Reaktionsschritte wie beispielsweise Umesterung/Veresterung weiterverwendet werden.

Im Sinne des erfindungsgemäßen Verfahrens hat es sich als besonders vorteilhaft erwiesen, Anlagerungsprodukte von durchschnittlich 0,8 bis 1,2 Mol Ethylenoxid oder Propylenoxid an Glycerin einzusetzen. Besonders bevorzugt sind das Glycerin-1PO und Glycerin-1EO-Addukt.

### Umesterungspolyole

Wie schon erwähnt, können die erfindungsgemäßen Glycerinalkoxylate entweder direkt mit den mehrwertigen Isocyanaten oder Carbonsäure(ester)n polymerisiert oder nach Umesterung mit Fettsäureestern eingesetzt werden.

Die Umesterung der Glycerinalkoxylate mit Fettsäureniedrigalkylestern und/oder Fettsäureglycerinestern kann in an sich bekannter Weise durchgeführt werden. Üblicherweise wird die Umesterung in Gegenwart alkalischer Katalysatoren, vorzugsweise Natrium- oder Lithiumhydroxid bei Temperaturen im Bereich von 180 bis 200°C durchgeführt. Das Einsatzverhältnis von Glycerinalkoxylat und Umesterungskomponente ist vorzugsweise so zu wählen, daß die Mischung eine Hydroxylzahl im Bereich von 250 bis 450, vorzugsweise 375 bis 425 aufweist.

Als Umesterungskomponenten kommen Ester von C₁-C₄-Alkoholen mit C₁₂-C₂₂-Fettsäuren wie beispielsweise Kokosfettsäuremethylester und Talgfettsäuremethylester oder gesättigte, vorzugsweise aber ganz oder überwiegend ungesättigte Triglyceride wie beispielsweise Kokosöl, Palmöl, Palmkernöl, Rüböl, Sonnenblumenöl, Olivenöl, Sojaöl oder Rindertalg in Frage.

### Isocyanate

Verfahren zur Polyaddition bzw. Polykondensation sind an sich bekannt und in der Literatur umfangreich beschrieben. An dieser Stelle soll stellvertretend auf die Übersicht in **W.Keim, A.Behr, G.Schmitt, "Grundlagen der industriellen Chemie",** **Verlag Salle + Sauerländer, Frankfurt.a.M., 1986, S.381-396** verwiesen werden.

Die mehrwertigen Isocyanate, die im Sinne der Erfindung zur Herstellung von Polyurethanen auf Basis der Glycerinalkoxylate bzw. deren Umesterungspolyolen in Betracht kommen, weisen im Mittel 2 bis höchstens 5, vorzugsweise bis 2 bis 4 NCO-Gruppen. Typische Beispiele sind Phenyldiisocyanat, 1,5-Naphtylendiisocyanat, 4,4'-Diphenylmethandiisocyanat (MDI), hydriertes MDI (H₁₂MDI), Xylylendiisocyanat (XDI), Tetramethylxylylendiisocyanat (TMXDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), gegebenenfalls in Mischung, l-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (IPDI), chorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylendiisocyanat, Phthalsäure-bis-isocyanatethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thiodiglycol oder Dihydroxydihexylsulfid. Weitere wichtige Diisocyanate sind Trimethylhexamethylendiisocyanat, 1,4'-Diisocyanatobutan, 1,12-Diisocyanatododecan und Dimerfettsäurediisocyanat. Interesse verdienen teilweise verkappte Polyisocyanate, welche die Bildung selbstvernetzender Polyurethane ermöglichen, z. B. dimeres Toluylendiisocyanat, oder mit beispielsweise Phenolen, tertiärem Butanol, Phthalimid, Caprolactam partiell oder vollständig umgesetzte Polyisocyanate.

Im allgemeinen werden aromatische Isocyanate bevorzugt, ebenso oligomerisierte NCO-endständige Addukte aus den oben genannten Isocyanaten und Polyolen, Polyaminen oder Aminoalkoholen. Jedoch vermögen - wider Erwarten - auch aliphatische Isocyanate schon bei Raumtemperatur schnell und vollständig zu reagieren. In Summe bevorzugt sind Hexamethylendiisocyanat (HMDI), Toluoldiisocyanat (TDI), Diphenylmethandiisocyanat (MDI) und Triphenylmethantriisocyanat (Desmodur^{(R)} R).

Die nach dem erfindungsgemäßen Verfahren erhältlichen Polyurethane sind geeignet für Beschichtungen, Dicht- und Klebstoffe. Zur Herstellung von Polyurethanschäumen können sowohl physikalische Treibverfahren (z. B. Zusatz von FCKW, HFCKW, Pentan, Dimethylether) als auch chemische Treibverfahren (Abspaltung von CO₂ nach Zusatz von Wasser oder Carbonsäuren) angewendet werden.

### Carbonsäuren bzw. Carbonsäureester

Zur Herstellung von Alkydharzen können die Glycerinalkoxylate bzw. deren Umesterungspolyole auch mit mehrwertigen Carbonsäuren weitervernetzt werden. Die Weitervernetzung kann jedoch auch mit Gemischen aus ein- und mehrwertigen Carbonsäuren erfolgen.

Die Herstellung der Polyester, Polyesterpolyole und Alkydharze kann in Gegenwart anderer polyfunktioneller Alkohole erfolgen. Beispiele sind Glykol, 1,2-Propandiol, Diethylenglycol, Triethylenglycol, Polyethylenglycol, Diglycerin, 2,2-Bis-(4-hydroxyphenyl)-propan, 2,2,4-Trimethyl-1,3-pentandiol, Sorbit, Ditrimethylolpropan, Pentaerythrit, Dipentaerythrit, Zuckerderivate und Neopentylglykol.

Unter mehrwertigen Carbonsäuren werden Stoffe verstanden, die mindestens zwei Carboxylgruppen und gegebenenfalls weitere Ether-, Ester-, Halogen-, Amid-, Amino- Hydroxy- und Harnstoffgruppen enthalten. Typische Beispiele stellen Adipinsäure, Sebacinsäure, Isophthalsäure, Terephthalsäure, Trimellitsäure, Phthalsäure, Hexahydrophthalsäure, Tetrachlorphthalsäure, Oxalsäure, Malonsäure, Bernsteinsäure, Glutarsäure, Fumarsäure, Citronensäure, Weinsäure, di- oder trimerisierte ungesättigte Fettsäuren, gegebenenfalls in Mischung mit monomeren ungesättigten Fettsäuren und gegebenenfalls; Partialester dieser Verbindungen dar.

Unter Carbonsäureestern sind native und synthetische Fettsäureglycerinester der Formel (I) zu verstehen, 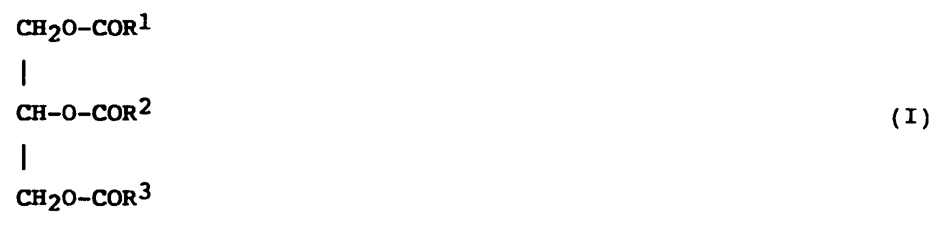 in der R¹CO, R²CO und R³CO unabhängig voneinander für lineare oder verzweigte, aliphatische oder aromatische Kohlenwasserstoffreste mit 6 bis 22 Kohlenstoffatomen und 0 bis 3 Doppelbindungen stehen. Typische Beispiele für Glycerinester sind natürliche Triglyceride pflanzlicher oder tierischer Herkunft, wie etwa Rüböl und Sonnenblumenöl alter oder neuer Züchtung, Ricinusöl, Palmöl, Sojaöl oder Kokosöl sowie chemisch modifizierte Triglyceride vom Typ der Sojapolyole, die man durch Epoxidation von Sojaöl und nachfolgende Öffnung der Oxiranringe mit geeigneten Nucleophilen, beispielsweise Alkoholen, erhält.

Wie schon erwähnt, können die mehrwertigen Carbonsäuren bzw. Ester in Abmischung mit C₁-C₂₂-Monocarbonsäuren eingesetzt werden.

In einer besonderen Ausführungsform des erfindungsgemäßen Verfahrens kann zunächst eine Polykondensation mit mehrwertigen Carbonsäuren und anschließend eine Polyaddition mit mehrwertigen Isocyanaten durchgeführt werden.

### Gewerbliche Anwendbarkeit

Die im Sinne der Erfindung einzusetzenden Glycerinalkoxylate zeichnen sich insbesondere durch leichte Handhabbarkeit, hohe Reaktionsgeschwindigkeit und gute Kompatibilität aus. Da die Hydroxylzahlen und die Funktionalitäten der genannten Glycerinalkoxylate mit TMP vergleichbar sind, ist in vielen Bereichen eine Substitution direkt möglich. Die im Gegensatz zu TMP flüssige Konsistenz der Verbindungen führt zu einer vereinfachten Handhabung und einem geringeren Aufwand an Technik und Energie.

Ein weiterer Gegenstand der Erfindung betrifft daher die Verwendung von Anlagerungsprodukten von durchschnittlich 0,5 bis 2 Mol Ethylen- und/oder Propylenoxid an Glycerin zur Herstellung von Polyadditions- und Polykondensationsprodukten.

Die Polyadditionsprodukte können ihrerseits Verwendung als Fasern (Lycra^{(R)}, Kunstleder, Spritzgußteile, Lacke (insbesondere sogenannte "DD-Lacke") sowie Hart- oder Weichschäume (z. B. Moltopren^{(R)} oder Vulkollan^{(R)}) finden. Die Polykondensationsprodukte können ferner als Alkyldharze für Einbrennlacke und lufttrocknende Lacke eingesetzt werden.

Die folgenden Beispiele sollen den Gegenstand der Erfindung näher erläutern, ohne ihn darauf einzuschränken.

### Beispiele

### Beispiel 1:

**Vergleich der hygroskopischen Eigenschaften von Glycerin, Glycerin x 1 PO und TMP.** Etwa 5 g der Verbindungen wurden in Bechergläsern (500 ml) 3 h im Klimaschrank (30°C, 80 % Luftfeuchte) und dann 20 h bei Raumtemperatur (ca. 40 % Luftfeuchte) aufbewahrt. Die Ergebnisse sind in Tab.1 zusammengefaßt.

**Tab.1:**

| Hygroskopische Eigenschaften | | | |
|---|---|---|---|
| Substanz | Gewicht vorher g | Gewicht nachher g | Zunahme Gew.-% |
| TMP | 5,16 | 5,83 | 13,0 |
| Glycerin | 5,14 | 6,11 | 18,9 |
| Glycerin-1 PO | 5,08 | 5,67 | 11,6 |

Glycerin-1PO erweist sich als weniger hygroskopisch als TMP oder Glycerin.

### Beispiele 2 bis 5:

**Synthese von Polyolen durch Umesterung von Glycerin, Glycerin x 1 PO, Glycerin x 3 PO und TMP mit Rüböl.** In einem 3-1-Dreihalskolben wurde eine Mischung aus 994 g (1,12 mol) Rüböl neuer Züchtung (Ölsäureanteil > 60 Gew.-%) und soviel einer Polyolverbindung gemäß Tab.2 vorgelegt, daß das Gemisch eine Hydroxylzahl von 400 besaß. Die Mischung wurde in Gegenwart von 1,5 g Lithiumhydroxid als Katalysator über einen Zeitraum von 4 bis 6 h bei 220°C unter Stickstoff einer Umesterung unterworfen. Nach Abkühlen auf 100°C wurde 0,5 h im Vakuum getrocknet und die Konsistenz der Produkte beurteilt. Die Ergebnisse sind in Tab.2 zusammengefaßt.

**Tab.2:**

| Umesterungspolyole | | | | |
|---|---|---|---|---|
| Bsp. | 2 | 3 | 4 | 5 |
| Edukt | Glycerin | Glycerin 1 PO | TMP | Glycerin 3 PO |
| Menge g | 278 | 551 | 464 | 1708 |
| Konsistenz | heterogen zweiphasig | klar homogen | klar homogen | klar homogen |

### Beispiele 6 bis 9:

**Vergleich von Cloudpoint und Viskosität von Umesterungspolyolen von Glycerin mit 0,5 bis 1,25 mol PO und Rüböl.** In einem 2-1-Dreihalskolben wurde eine Mischung aus 994 g (1,12 mol) Rüböl neuer Züchtung (Ölsäureanteil > 60 Gew.-%) und soviel eines Umsetzungsproduktes von Glycerin mit 0,5 bis 1,25 mol Propylenoxid gemäß Tab.3 vorgelegt, daß das Gemisch eine Hydroxylzahl (OHZ) von 400 besaß. Die Mischung wurde in Gegenwart von 1,5 g Lithiumhydroxid als Katalysator über einen Zeitraum von 4 bis 6 h bei 220°C unter Stickstoff einer Umesterung unterworfen. Nach Abkühlen auf 100°C wurde 0,5 h im Vakuum getrocknet und Cloudpoint und Viskosität der Produkte bei 25°C gemessen. Die Ergebnisse sind in Tab.3 zusammengefaßt.

**Tab.3:**

| Eigenschaften der Umesterungspolyole | | | | |
|---|---|---|---|---|
| Bsp. | PO | OHZ | Cloudpoint °C | Viskosität Höppler mPas |
| 6 | 0,5 | 395 | 0 | 467 |
| 7 | 0,75 | 405 | -3 | 425 |
| 8 | 1 | 398 | -8 | 382 |
| 9 | 1,25 | 401 | -5 | 397 |

### Beispiele 10 bis 13:

**Polyurethane auf Basis von Umesterungspolyolen und MDI.** 20 g der Umesterungspolyole aus den Beispielen 2 bis 5 wurden mit 1 g Baylith^{(R)}-Paste sorgfältig vermischt, unter Rühren mit 20 g technischem Methylendiphenyldiisocyanat (Desmodur^{(R)} VKS) und anschließend mit 1 Tropfen Formrez^{(R)} UL 24 versetzt. Die Massen wurden 15,5 h im Trockenschrank bei 90°C und dann 2 h bei Raumtemperatur gelagert. Danach wurde die Shore-Härte der PUR-Massen gemessen. Die Verträglichkeit wurde visuell auf einer Skala von 1 (gut verträglich) bis 3 (schlecht verträglich) bewertet. Die Ergebnisse sind in Tab.4 zusammengefaßt:

**Tab.4:**

| PUR-Vergußmassen | | | | |
|---|---|---|---|---|
| Bsp. | 10 | 11 | 12 | 13 |
| Edukt | Glycerin | Glycerin 1 PO | TMP | Glycerin 3 PO |
| Verträglichkeit | 3 | 1 | 1-2 | 1-2 |
| Shore-D-Härte | n.b. | 64,4 | 67,4 | 78,2 |

## Patentansprüche

1. Verwendung von Anlagerungsprodukten von durchschnittlich 0,5 bis 2 Mol Ethylen- und/oder Propylenoxid an Glycerin zur Herstellung von Polyadditions-bzw. Polykondensationsprodukten, wobei man die genannten Anlagerungsprodukte
a) unmittelbar oder
b) über die Zwischenstufe der Umesterungsprodukte mit Estern von C₁ bis C₄-Alkoholen und C₁₂ bis C₂₂-Fettsäuren, wobei die Ester der Ricinolsäure nicht umfaßt sind
mit mehrwertigen Isocyanaten oder mehrwertigen Carbonsäuren bzw. Carbonsäureestern polymerisiert.

2. Verwendung nach Anspruch 1, wobei man Anlagerungsprodukte von durchschnittlich 0,8 bis 1,2 Mol Ethylenoxid oder Propylenoxid an Glycerin einsetzt.

3. Verwendung nach den Ansprüchen 1 und 2, wobei man die mehrwertigen Isocyanate auswählt aus der Gruppe, die von Hexamethylendiisocyanat (HMDI), Toluoldiisocyanat (TDI), Diphenylmethandiisocyanat (MDI) und Triphenylmethantriisocyanat gebildet wird.

4. Verwendung nach den Ansprüchen 1 und 2, wobei man die mehrwertigen Carbonsäuren auswählt aus der Gruppe, die von Phthalsäure, Adipinsäure, Citronensäure, Maleinsäure und Trimellithsäure und deren Estern gebildet wird.

5. Verwendung nach den Ansprüchen 1 bis 4, wobei man zunächst eine Polykondensation mit mehrwertigen Carbonsäuren und anschließend eine Polyaddition mit mehrwertigen Isocyanaten durchführt.

## Claims

1. The use of addition products of, on average, 0.5 to 2 moles of ethylene and/or propylene oxide with glycerol for the production of polyaddition and polycondensation products, the said addition products being polymerized with polyfunctional isocyanates or polybasic carboxylic acids or carboxylic acid esters
a) directly or
b) via the intermediate stage of transesterification products with esters of C₁₄ alcohols and C₁₂₋₂₂ fatty acids not including the esters of ricinoleic acid.

2. The use claimed in claim 1, characterized in that addition products of on average 0.8 to 1.2 moles of ethylene oxide or propylene oxide with glycerol are used.

3. The use claimed in claims 1 and 2, characterized in that polyfunctional isocyanates selected from the group consisting of hexamethylene diisocyanate (HMDI), toluene diisocyanate (TDI), diphenylmethane diisocyanate (MDI) and triphenylmethane triisocyanate are used.

4. The use claimed in claims 1 and 2, characterized in that polybasic carboxylic acids selected from the group consisting of phthalic acid, adipic acid, citric acid, maleic acid and trimellitic acid or esters thereof are used.

5. The use claimed in claims 1 to 4, characterized in that polycondensation with polybasic carboxylic acids is carried out first followed by polyaddition with polyfunctional isocyanates.

## Revendications

1. Utilisation de produits d'addition de, en moyenne, 0,5 à 2 mol d'oxyde d'éthylène et/ou d'oxyde de propylène sur le glycérol en vue de la préparation de produits de polyaddition ou de polycondensation dans laquelle on polymérise les produits d'addition cités :
a) directement ou
b) par l'intermédiaire de l'étape intermédiaire des produits de transestérification avec des esters d'alcools en C₁ à C₄ et d'acides gras en C₁₂ à C₂₂ parmi lesquels les esters d'acide ricinoléique ne sont pas compris,
avec des isocyanates plurivalents ou des acides carboxyliques ou des esters d'acide carboxyliques plurivalents.

2. Utilisation selon la revendication 1,
dans laquelle
on met en oeuvre des produits d'addition de, en moyenne, 0,8 à 1,2 mol d'oxyde d'éthylène ou d'oxyde de propylène sur glycérol.

3. Utilisation selon les revendications 1 et 2,
dans laquelle
on choisit les isocyanates plurivalents dans le groupe qui est formé par l'hexaméthylènediisocyanate (HMDI), le toluènediisocyanate (TDI), le diphénylméthanediisocyanate (MDI) et le triphénylméthanetriisocyanate.

4. Utilisation selon les revendications 1 et 2,
dans laquelle
on choisit les acides carboxyliques plurivalents dans le groupe qui est formé par l'acide phtalique, l'acide adipique, l'acide citrique, l'acide maléique et l'acide triméllitique ainsi que de leurs esters.

5. Utilisation selon les revendications 1 à 4,
dans laquelle
on effectue en premier lieu une polycondensation avec des acides carboxyliques plurivalents et ensuite une polyaddition avec des isocyanates plurivalents.
